# EUROPÄISCHE PATENTSCHRIFT

(11) **EP 0 538 513 B1**
(45) Veröffentlichungstag und Bekanntmachung des Hinweises auf die Patenterteilung: **21.06.1995**
(21) Anmeldenummer: 91118135.2
(22) Anmeldetag: 24.10.1991
(51) Int. Cl.: B27D 5/00, B27B 5/06, B23D 45/20, B26D 1/60

(54) **Kappaggregat zum Abtrennen von Ueberständen von Kantenmaterial**
Cutting system for separating the overhang of an edge material
Dispositif pour couper les extrémités en saillie d'un matériau situé du chant

(43) Veröffentlichungstag der Anmeldung: 28.04.1993
(73) Patentinhaber: HEINRICH BRANDT MASCHINENBAU GmbH, D-32657 Lemgo (DE)
(72) Erfinder: Franz, Karl-Bernhard, W-4920 Lemgo-Leese (DE); Kutassi, Paul, W-4800 Bielefeld 1 (DE); Heidemann, Hans-Dieter, W-3054 Rodenberg (DE)
(74) Vertreter: Kohlmann, Karl Friedrich, Dipl.-Ing.

(56) Entgegenhaltungen:
- DE-A- 2 119 388
- DE-A- 2 553 042
- DE-A- 2 721 918
- FR-A- 2 084 411

## Beschreibung

Die vorliegende Erfindung betrifft ein Kappgerät für Maschinen zur Bearbeitung von geradlinig und fortlaufend bewegten plattenförmigen Werkstücken zum Abtrennen von über die vorderen und hinteren, im wesentlichen quer zur Bewegungsrichtung der Werkstücke verlaufenden Schmalflächen der Werkstücke hinausstehenden Überstände von Kantenmaterial, welches an parallel zur Bewegungsrichtung verlaufenden Schmalflächen der Werkstücke angebracht, vorzugsweise angeleimt ist,
- mit jeweils einer mit einem angetriebenen Kappsägeblatt ausgestatteten Sägeeinheit für den vorderen und den hinteren Kantenmaterialüberstand,
- je einem Anschlag für jedes Kappsägeblatt, dessen Anschlagfläche mit einer Schnittebene des jeweiligen Kappsägeblattes fluchtet und an der vorderen bzw. hinteren Schmalfläche der plattenförmigen Werkstücke anlegbar ist,
- einer Schrägführungsanordnung, mit der die Sägeeinheiten zur Durchführung der Trennschnitte mit dem wirksamen Bereich ihrer Kappsägeblätter von einer Stellung über bzw. unter dem Kantenmaterial entlang einer schräg zur Werkstückdurchlaufebene verlaufenden Ebene in eine Stellung unter bzw. über dem Kantenmaterial und zurück verfahrbar sind.

Kappaggregate dieser Art sind in den verschiedensten Ausführungsformen seit langem bekannt. Die Schrägführungsanordnung derartiger bekannter Kappaggregate besteht dabei aus zwei separaten, meist sogar voneinander getrennten Führungseinheiten, von denen die eine Führungseinheit die Sägeeinheit für den vorderen, und die andere Führungseinheit die Sägeeinheit für den hinteren Kantenmaterialüberstand trägt.

Bekannt sind dabei in Form von Säulenführungen ausgestaltete Führungseinheiten, die nach oben aufeinander zulaufen (sogenannte Spitz-Anordnungen), nach oben auseinanderlaufen (sogenannte V-Anordnungen) oder parallel zueinander verlaufen (sogenannte Parallel-Anordnungen).

Darüber hinaus sind Führungsanordnungen bekannt, die als Parallelogrammführung ausgebildet sind (vgl. z.B. DE-Gbm 73 15 715) oder als sogenannte Waagerecht-Doppelstangenführungen.

Sämtliche bekannten Schrägführungsanordnungen benötigen aufgrund der Unterteilung in getrennte Führungseinheiten relativ viel Platz. Auch stellen sie aufgrund der Doppelanordnung technisch aufwendige und wegen der großen Anzahl der erforderlichen Teile fertigungstechnisch teure Lösungen dar.

Aufgabe der vorliegenden Erfindung ist es, ein Kappaggregat der eingangs beschriebenen Gattung derart weiterzubilden, daß ohne funktionelle Nachteile bei technisch einfachem Aufbau eine kompaktere Konstruktion erzielt wird.

Diese Aufgabe wird erfindungsgemäß dadurch gelöst, daß die Schrägführungsanordnung in Abkehr von der bisherigen Unterteilung in separate Führungseinheiten als einzige Führungsbahn ausgestaltet ist, an der beide Sägeeinheiten verfahrbar gelagert sind.

Der erfindungsgemäßen Lösung liegt somit der Gedanke zugrunde, anstelle der bisher erforderlichen zwei Führungseinheiten lediglich ein einzige Führungseinheit vorzusehen und beide Sägeeinheiten derart zu gestalten, daß sie ohne gegenseitige funktionelle Beeinträchtigung an der einzigen Führungsbahn verfahrbar sind.

Infolge der Reduzierung der Schrägführungsanordnung auf eine einzige Führungsbahn ergibt sich fertigungstechnisch eine Verringerung der Anzahl der Einzelteile und damit eine erhebliche Kostenreduzierung.

Darüber hinaus ermöglicht der Wegfall der zweiten Führungseinheit eine kompaktere Bauweise, die zu einem vergleichsweise geringerem Platzbedarf führt.

Die Lagerung der beiden Sägeeinheiten an der einzigen Führungsbahn ist in technischer Hinsicht in vielfältiger Weise gestaltbar. Ein besonders einfacher Aufbau ergibt sich bekanntermaßen, wenn das jeweilige Kreissägeblatt unmittelbar auf der Abtriebswelle eines Elektromotors gelagert ist, weil dadurch Übertragungsgetriebe entfallen können. Bei einer derartigen Anordnung ist es gemäß einer vorteilhaften Weiterbildung der Erfindung zweckmäßig, die Sägeeinheiten derart an der einzigen Führungsbahn zu lagern, daß die Sägeblätter mit ihrer einen Seitenfläche dicht aneinander fahrbar, und die Elektromotoren jeweils auf den einander abgewandten Seiten der Sägeblätter angeordnet sind.

Mit einer derartigen Anordnung können relativ kurze Werkstücklängen bearbeitet werden, ohne daß sich die beiden Sägeeinheiten hierbei in irgendeiner Weise stören.

Vorteilhaft ist es, wenn die einzige Führungsbahn als Linear-Säulenführung ausgebildet ist. Derartige Linear-Säulenführungen sind bewährt, fertigungstechnisch einfach herstellbar und arbeiten auch über längere Betriebszeiten spiel- und störungsfrei.

Derartige Linear-Säulenführungen können grundsätzlich als Doppelstangenführung mit Führungsschlitten ausgebildet sein. Vorteilhaft ist es jedoch, wenn eine sogenannte vorgespannte Linearführung mit Laufschuh als Führungsbahn eingesetzt wird.

Die einzige Führungsbahn kann in einem Winkel zwischen 30° und 60° gegenüber der Werkstückdurchlaufebene geneigt angeordnet werden. Vorteilhaft ist es jedoch, als Neigungswinkel 45° zu wählen.

Im folgenden ist zur weiteren Erläuterung und zum besseren Verständnis der Erfindung ein Ausführungsbeispiel unter Bezugnahme auf die beigefügten Zeichnungen näher beschrieben und erläutert.
Figur 1 zeigt schematisch die wesentlichsten Teile eines erfindungsgemäßen Kappgerätes in einer Seitenansicht,
Figur 2 zeigt schematisch eine Stirnansicht des Kappgerätes nach Figur 1 aus der Richtung des Pfeiles II der Figur 1, und
Figuren 3 bis 8 zeigen schematisch zur Erläuterung der Arbeitsweise verschiedene Phasen des Abtrennvorganges.

Wie eingangs bereits ausgeführt, handelt es sich bei dem erfindungsgemäßen Kappgerät um ein Aggregat für eine Maschine zur Bearbeitung von geradlinig und fortlaufend bewegten plattenförmigen Werkstücken. Von dieser Maschine ist der besseren Übersicht halber lediglich eine Führungsbahn 1 für die Werkstücke W, welche als Förderband, Förderkette oder dergleichen ausgebildet sein kann, schematisch dargestellt.

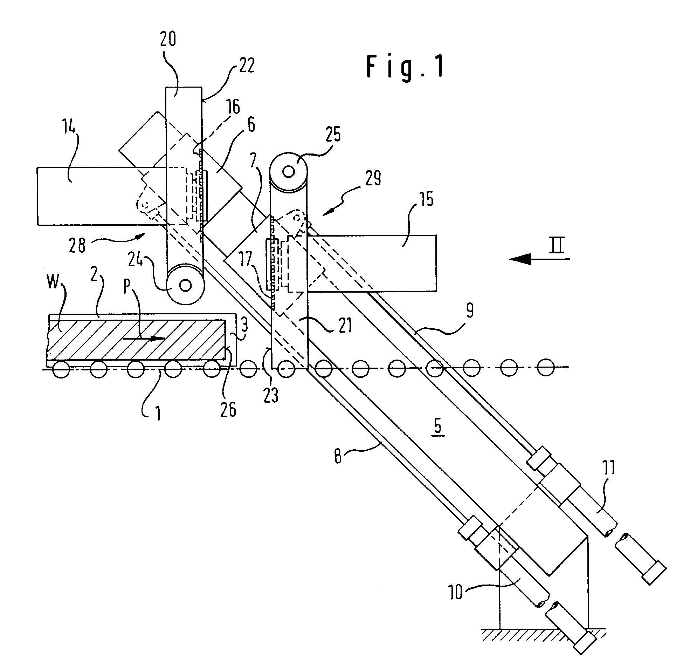

Wie aus Figur 1 hervorgeht, bewegt sich das Werkstück W in Richtung des Pfeiles P und ist in einem vorangegangenen, nicht dargestellten Arbeitsgang auf seiner parallel zur Bewegungsrichtung verlaufenden und dem Betrachter abgewandten Schmalseite mit einem Kantenmaterial 2 versehen worden. Dies erfolgt üblicherweise in einer vorgeschalteten Anleimstation, in der das Kantenmaterial 2 von einem Vorrat abgezogen und im Anschluß daran im Durchlauf an die Schmalfläche angeleimt wird.

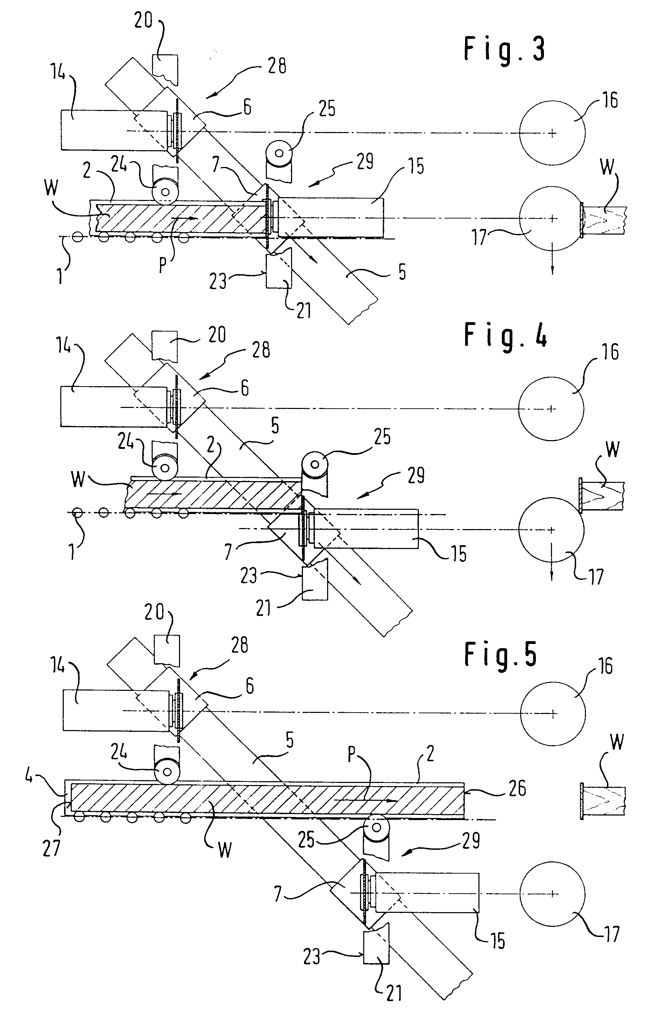

Wie aus Figur 1 ferner hervorgeht, steht das Kantenmaterial 2 nach oben und unten sowie in Bewegungsrichtung gesehen nach vorne über die Schmalfläche des Werkstückes in Form eines Kantenmaterialüberstandes 3 hinaus. Ein entsprechender Überstand 4 ist auch an dem in Durchlaufrichtung hinteren Ende des Werkstückes vorgesehen, wie beispielsweise die Figur 5 zeigt.

Aufgabe des Kappgerätes der hier zur Diskussion stehenden Gattung ist es nun, den in Bewegungsrichtung vorderen Kantenmaterialüberstand 3 sowie den in Bewegungsrichtung hinteren Kantenmaterialüberstand 4 (vgl. Fig. 5) abzutrennen. Das Abtrennen des nach oben und unten überstehenden Kantenmaterialüberstandes erfolgt über Fräsaggregate, die nicht Gegenstand der vorliegenden Anmeldung sind.

Basis des in den Zeichnungen dargestellten Ausführungsbeispieles des Kappgerätes ist eine Schrägführungsanordnung, welche erfindungsgemäß lediglich eine einzige Führungsbahn 5 aufweist. Diese Führungsbahn 5 ist als Linear-Säulenführung ausgebildet und trägt zwei Laufschuhe 6 und 7, welche über Kolbenstangen 8 und 9 von Arbeitszylindern 10 und 11 entlang der Führungsbahn 5 hin- und herverschiebbar sind.

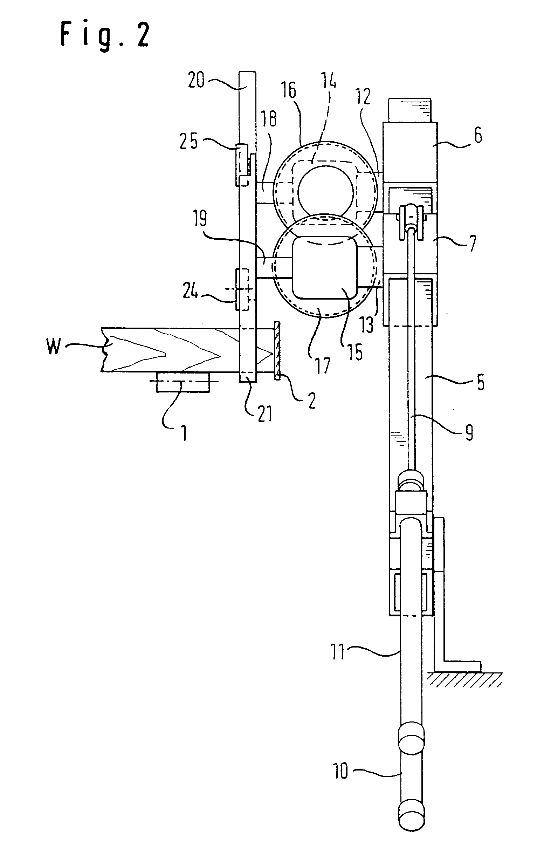

Wie aus Figur 2 hervorgeht, sind an den Laufschuhen 6 und 7 seitlich Halterungen 12 und 13 angeordnet, die Elektromotoren 14 und 15 tragen, auf deren Antriebswellen Kappsägeblätter 16 und 17 drehfest befestigt sind. Die Laufschuhe 6 und 7 tragen ferner Halterungen 18 und 19, an deren freien Enden Anschläge 20 und 21 befestigt sind. Die Anschläge 20 und 21 weisen Anschlagflächen 22 und 23 auf, die genau fluchtend in der Schnittebene der Kappsägeblätter 16 und 17 liegen.

Die Anschläge 20 und 21 sind im Bereich ihres einen Endes mit Rollen 24 und 25 ausgestattet, die derart angeordnet sind, daß die jeweilige Anschlagfläche 22 bzw. 23 des Anschlages 20 bzw. 21 präzise tangential in die Umfangsfläche der jeweiligen Rolle 24 bzw. 25 einmündet.

Wie aus Figur 2 hervorgeht, sind die Anschläge 20 und 21 derart bemessen und angeordnet, daß sie jeweils an der im wesentlichen quer zur Bewegungsrichtung der Werkstücke verlaufenden vorderen Schmalfläche 26 bzw. hinteren Schmalfläche 27 (vgl. Fig. 5) zur Anlage gebracht werden können, wie dies im folgenden noch im einzelnen beschrieben werden wird.

Im vorliegenden Ausführungsbeispiel bildet der Laufschuh 6 zusammen mit den Halterungen 12 und 18, dem Eletromotor 14, dem Sägeblatt 16 sowie dem Anschlag 20 mit der Rolle 24 eine obere Sägeeinheit 28.

Desgleichen bildet der Laufschuh 7 mit den Halterungen 13 und 19, dem Elektromotor 15, dem Sägeblatt 17 sowie dem Anschlag 21 mit der Rolle 25 eine untere Sägeeinheit 29. Die obere Sägeeinheit 28 wird über die Kolbenstange 8 durch den Arbeitszylinder 10 betätigt, während die untere Sägeeinheit 29 über die Kolbenstange 9 durch den Arbeitszylinder 11 verfahren wird.

Die Arbeitsweise des erfindungsgemäßen Kappgerätes ist nun die folgende:
In der Ausgangsstellung befinden sich die Sägeeinheiten 28 und 29 in der in Figur 1 dargestellten Lage. In dieser Lage ist die obere Sägeeinheit 28 über den Arbeitszylinder 10 in die oberste Endstellung gefahren, in der der Anschlag 20 mit der Rolle 24 über der Oberseite des in Richtung des Pfeiles P angelieferten Werkstückes W liegt.

Das untere Sägeaggregat 29 wiederum wurde über den Arbeitszylinder 11 in eine etwas abgesenkte Stellung verfahren, in der der Anschlag 21 in der Bewegungsbahn des Werkstückes W liegt, wie dies auch aus Figur 2 zu erkennen ist.

Im Verlaufe seiner Bewegung in Richtung des Pfeiles P gelangt nun das Werkstück W mit seiner vorderen Schmalfläche 26 an der Anschlagfläche 23 des Anschlages 21 des unteren Sägeaggregates 29 zur Anlage. Zu diesem Zeitpunkt läuft das Kappsägeblatt 17, und der Arbeitszylinder 11 hält die Anschlagsfläche 23 des Anschlages 21 in Anlage an der vorderen Schmalfläche 26 des Werkstückes W, ohne dessen Bewegung in Richtung des Pfeiles P zu behindern. Die Folge ist, daß das Werkstück W über seine vordere Schmalfläche 26 und den Anschlag 21 die untere Sägeeinheit 29 entlang der Führungsbahn 5 von der in Figur 1 gezeigten Ausgangsstellung über die in Figuren 3 und 4 dargestellten Phasen von links oben nach rechts unten bis in die in Figur 5 dargestelle Warteposition verschiebt. Während dieses Verschiebevorganges wird das Sägeblatt 17 der unteren Sägeeinheit 29 relativ zum Werkstück W senkrecht aus der in Figur 2 dargestellten Stellung nach unten verfahren und trennt dabei mit seinem wirksamen Bereich den über die vordere Schmalfläche 26 hinausstehenden Kantenmaterialüberstand 3 genau bündig mit der vorderen Schmalfläche 26 ab. Zwei Phasen des Abtrennvorganges zeigen die Figuren 3 und 4. Zur besseren Veranschaulichung dieses Vorganges ist jeweils rechts neben den Figuren 3, 4 und 5 die Lage des Kappsägeblattes 7 der unteren Sägeeinheit 29 in bezug auf das Werkstück W in einer etwa der Figur 2 entsprechenden Ansicht schematisch dargestellt. In der in Figur 5 dargestellten Phase befindet sich die untere Sägeeinheit 29 mit der Rolle 25 ihres Anschlages 21 bereits unterhalb des Werkstückes W in der Warteposition, so daß die Sägeeinheit 29 durch das Werkstück W überlaufen werden kann.

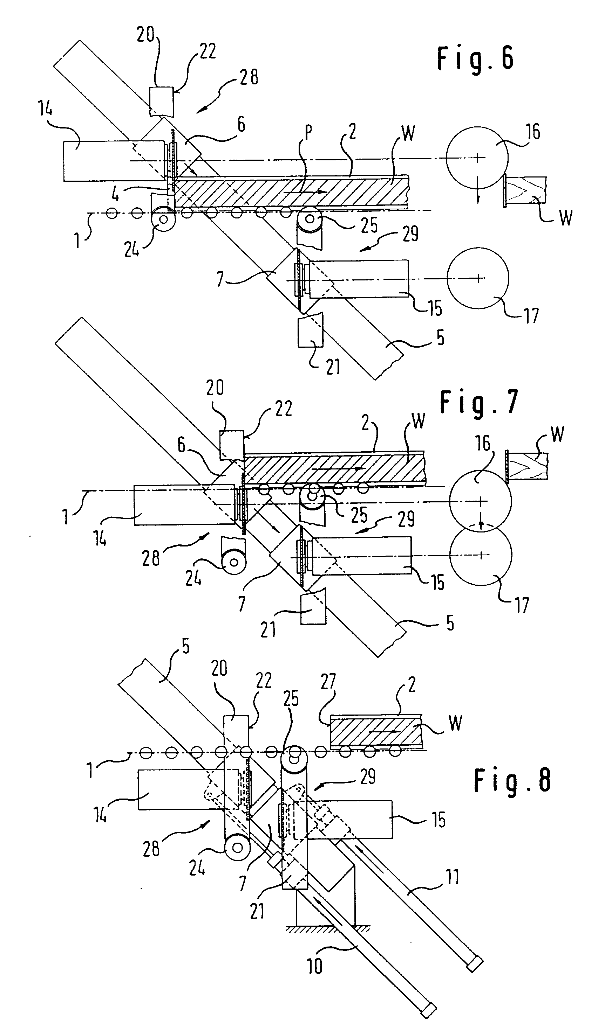

Im Verlaufe des durch die untere Sägeeinheit 29 bewirkten Trennvorganges ist die obere Sägeeinheit 28 über den Arbeitszylinder 10 entlang der Führungsbahn 5 bereits nach unten derart weit verschoben worden, daß die Rolle 4 des Anschlages 20 auf der Oberseite des Werkstückes W zu liegen kommt. In dieser Stellung verbleibt die obere Sägeeinheit 28 in den Phasen gemäß den Figuren 3, 4 und 5. Gerät nun die Rolle 24 des Anschlages 20 der oberen Sägeeinheit 28 in den Bereich der hinteren Schmalfläche 27 des Werkstückes W, so tritt der Arbeitszylinder 10 in Aktion und zieht über die Kolbenstange 8 die obere Sägeeinheit 28 mit der Anschlagfläche 22 des Anschlages 20 an die hintere Schmalfläche 27 des Werkstückes W heran. Im Verlaufe der weiteren Bewegung des Werkstückes W in Richtung des Pfeiles P hält der Arbeitszylinder 10 die Anschlagfläche 22 in Anlage an der hinteren Schmalfläche 27, so daß nunmehr auch die obere Sägeeinheit 28 entlang der Führungsbahn 5 von links oben nach rechts unten bewegt wird, wie dies in den Figuren 6 bis 8 dargestellt ist. Auch in diesen Figuren 6 bis 8 ist zur besseren Veranschaulichung des Trennvorganges jeweils rechts neben den Figuren die Lage des Kappsägeblattes 16 in bezug auf das Werkstück W in einer der Figur 2 entsprechenden Ansicht schematisch dargestellt. In Figur 6 gerät somit das Sägeblatt 16 in Eingriff mit dem hinteren Kantenüberstand 4 und trennt diesen fluchtend mit der hinteren Schmalfläche 27 des Werkstückes W ab. Dieser Trennvorgang ist in der in Figur 7 dargestellten Phase abgeschlossen.

Das obere Sägeaggregat 28 wird dann über den Arbeitszylinder 10 noch bis in die in Figur 8 dargestellte Warteposition abgesenkt und dann zusammen mit dem bereits in dieser unteren Warteposition gehaltenen unteren Sägeeinheit 29 über einen Schnellhub wieder in die in Figur 1 dargestellte Ausgangsstellung zurückgebracht. In dieser Ausgangsstellung ist dann das Kappgerät zur Durchführung des nächsten Arbeitsvorganges bereit.

## Patentansprüche

1. Kappgerät für Maschinen zur Bearbeitung von geradlinig und fortlaufend bewegten plattenförmigen Werkstücken (W) zum Abtrennen von über die vorderen und hinteren, im wesentlichen quer zur Bewegungsrichtung der Werkstücke verlaufenden Schmalflächen (26, 27) der Werkstücke hinausstehenden Überstände (3, 4) von Kantenmaterial (2), welches an parallel zur Bewegungsrichtung verlaufenden Schmalflächen der Werkstücke angebracht, vorzugsweise angeleimt ist,
- mit jeweils einer mit einem angetriebenen Kappsägeblatt (16 bzw. 17) ausgestatteten Sägeeinheit (28 bzw. 29) für den vorderen (3) und den hinteren (4) Kantenmaterialüberstand,
- je einem Anschlag (20 bzw. 21) für jedes Kappsägeblatt (16 bzw. 17), dessen Anschlagfläche (22 bzw. 23) mit einer Schnittebene des jeweiligen Kappsägeblattes (16 bzw. 17) fluchtet und an der vorderen bzw. hinteren Schmalfläche (26 bzw. 27) der plattenförmigen Werkstücke anlegbar ist,
- einer Schrägführungsanordnung, mit der die Sägeeinheiten (28 bzw. 29) zur Durchführung der Trennschnitte mit dem wirksamen Bereich ihrer Kappsägeblätter von einer Stellung über bzw. unter dem Kantenmaterial (2) entlang einer schräg zur Werkstückdurchlaufebene verlaufenden Ebene in eine Stellung unter bzw. über dem Kantenmaterial (2) und zurück verfahrbar sind,
dadurch **gekennzeichnet,** daß
die Schrägführungsanordnung eine einzige Führungsbahn (5) aufweist, an der beide Sägeeinheiten (28 und 29) verfahrbar gelagert sind.

2. Kappaggregat nach Anspruch 1, mit jeweils auf einer Abtriebswelle eines Elektromotors (14 bzw. 15) unmittelbar angeordneten Kappsägeblatt (16 bzw. 17),
dadurch **gekennzeichnet,** daß
die Sägeeinheiten (28 und 29) derart an der einzigen Führungsbahn (5) gelagert sind, daß die Kappsägeblätter (16 und 17) dicht aneinander fahrbar und die Elektromotoren (14 und 15) jeweils auf den einander abgewandten Seiten der Sägeblätter angeordnet sind.

3. Kappaggregat nach Anspruch 1 oder 2,
dadurch **gekennzeichnet,** daß
die einzige Führungsbahn (5) als Linear-Säulenführung ausgebildet ist.

4. Kappaggregat nach Anspruch 1, 2 oder 3,
dadurch **gekennzeichnet,** daß
die einzige Führungsbahn (5) in einem Winkel zwischen 30° und 60°C gegenüber der Werkstückdurchlaufebene geneigt ist.

5. Kappaggregat nach Anspruch 4,
dadurch **gekennzeichnet,** daß
der Winkel 45° beträgt.

6. Kappaggregat nach Anspruch 1 oder 2 und 3,
dadurch **gekennzeichnet,** daß
die Sägeeinheiten (28 bzw. 29) über vorgespannte spielfreie Laufschuhe (6 bzw. 7) auf der Linearführung gelagert sind.

## Claims

1. Capping device for machines for machining rectilinearly and continuously moving plate-shaped workpieces (W) for separating projecting portions (3, 4) of edge material (2) which is mounted on, preferably glued to, narrow surfaces of the workpieces extending parallel to the direction of travel, which projecting portions protrude beyond the front and rear narrow surfaces (26, 27) of the workpieces extending essentially transversely to the direction of travel of the workpieces,
- with a sawing unit (28 or 29) equipped with a driven cross-cut saw blade (16 or 17) for each of the front (3) and rear (4) projecting portions of edge material,
- with a stop (20 or 21) for each cross-cut saw blade (16 or 17) of which the stop face (22 or 23) is aligned with a cutting plane of the respective cross-cut saw blade (16 or 17) and can be applied to the front or rear narrow surface (26 or 27) of the plate-shaped workpieces,
- a sloping guide assembly with which the sawing units (28 or 29) to perform the separating cuts with the operative region of their cross-cut saw blades can be moved from a position above or below the edge material (2) along a plane extending obliquely to the plane through which the workpieces travel into a position below or above the edge material (2) respectively and back, characterised in that the sloping guide assembly comprises a single guide track (5) on which both sawing units (28 and 29) are mounted movably.

2. Capping assembly according to claim 1, with a cross-cut saw blade (16 or 17) mounted directly in each case on an output shaft of an electric motor (14 or 15), characterised in that the sawing units (28 and 29) are mounted on the single guide track (5) in such a way that the cross-cut saw blades (16 and 17) can be moved close together and the electric motors (14 and 15) are arranged in each case on the sides of the saw blades facing away from each other.

3. Capping assembly according to claim 1 or 2, characterised in that the single guide track (5) is constructed as a linear column guide.

4. Capping assembly according to claim 1, 2 or 3, characterised in that the single guide track (5) is inclined at an angle of between 30° and 60° to the plane through which the workpieces travel.

5. Capping assembly according to claim 4, characterized in that the angle is 45°.

6. Capping assembly according to claim 1 or 2 and 3, characterized in that the sawing units (28 or 29) are mounted on the linear guide by means of pretensioned running blocks (6 or 7) with zero backlash.

## Revendications

1. Dispositif de découpage pour des machines d'usinage de pièces à scier (W) se présentant sous forme de plaques, déplacée selon une trajectoire rectiligne et de façon continue, pour opérer le découpage des dépassements (3, 4) d'un matériau de chant (2) faisant saillie sur les petits côtés (26, 27) avant et arrière des pièces à scier, et s'étendant sensiblement transversalement par rapport à la direction de déplacement des pièces à scier, le matériau de chant étant appliqué, de préférence par collage, sur les petits côtés, s'étendant parallèlement par rapport à la direction de déplacement, des pièces à scie,
- avec des unités de sciage (28, respectivement 29) équipées chacune d'une lame de scie de découpage (16, respectivement 17) entrainée, pour traiter le dépassement de matériau de chant avant (3) et arrière (4),
- avec, pour chaque unité de sciage, une butée (20, respectivement 21), pour chaque lame de scie de découpage (16 respectivement 17), dont la surface de butée (22 respectivement 23) est alignée avec un plan de coupe de la lame de scie de découpage (16, respectivement 17) respective et peut être appliquée sur le petit coté (26 respectivement 27) avant respectivement arrière des pièces à scier se présentant sous forme de plaques,
- avec un dispositif de guidage oblique, à l'aide duquel les unités de sciage (28 respectivement 29) sont déplaçables, pour effectuer les découpages de séparation avec la zone active de leur lame de scie de découpage, d'une position située au-dessus, respectivement au-dessous du matériau de chant (2), le long d'un plan s'étendant obliquement par rapport au plan de passage de pièces à scier, en allant dans une position située au-dessous, respectivement au-dessus du matériau de chant (2) et inversement,
caractérisé en ce que le dispositif de guidage oblique présente une piste de guidage (5) unique, sur laquelle les deux unités de sciage (28 et 29) sont montées déplaçables.

2. Groupe de découpage selon la revendication 1, comportant une lame de scie de découpage (16, respectivement 17), disposées respectivement directement sur un arbre mené d'un moteur électrique (14 respectivement 15), caractérisé en ce que les unités de sciage (28 et 29) sont montées sur la piste de guidage (5) unique de manière que les lames de scie de découpage (16 et 17) soient déplaçables prés l'une de l'autre, les moteurs électriques (14 et 15) étant respectivement disposés sur les côtés opposés l'un par rapport à l'autre des lames de scie.

3. Groupe de découpage selon la revendication 1 ou 2, caractérisé en ce que la piste de guidage (5) unique est réalisée sous forme de guidage à colonne à déplacement rectiligne.

4. Groupe de découpage selon la revendication 1, 2 ou 3, caractérisé en ce que la piste de guidage (5) unique est inclinée d'un angle compris entre 30° et 60° par rapport au plan de passage de la pièce à scier.

5. Groupe de découpage selon la revendication 4, caractérisé en ce que l'angle d'inclinaison est de 45°.

6. Groupe de découpage selon la revendication 1 ou 2 et 3, caractérisé en ce que les unités de sciage (28, respectivement 29) sont montées sur le guidage linéaire, par l'intermédiaire de patins de défilement (6 respectivement 7) précontraints, sans jeu.
